# EUROPÄISCHE PATENTSCHRIFT

(11) **EP 1 436 167 B1**
(45) Veröffentlichungstag und Bekanntmachung des Hinweises auf die Patenterteilung: **29.06.2005**
(21) Anmeldenummer: 02801336.5
(22) Anmeldetag: 15.10.2002
(51) Int. Cl.: B60R 13/02

(54) **DEKORELEMENT UND MIT EINEM DEKORELEMENT VERSEHENES KUNSTSTOFFTEIL**
DECORATIVE ELEMENT AND PLASTIC PART PROVIDED WITH A DECORATIVE ELEMENT
ELEMENT DECORATIF ET PIECE EN MATIERE PLASTIQUE POURVUE D'UN ELEMENT DECORATIF

(30) Priorität: 16.10.2001 AT 16422001
(43) Veröffentlichungstag der Anmeldung: 14.07.2004
(73) Patentinhaber: Burg Design GmbH, 4431 Haidershofen 199 (AT)
(72) Erfinder: OBERMANN, Friedrich, A-4522 Waldneukirchen (AT)
(74) Vertreter: Vinazzer, Edith, Dipl.-Ing.
(86) Internationale Anmeldenummer: PCT/EP2002/011508
(87) Internationale Veröffentlichungsnummer: WO 2003/033306

(56) Entgegenhaltungen:
- DE-U- 29 721 627
- US-A- 5 270 097
- US-A- 5 296 340
- PATENT ABSTRACTS OF JAPAN vol. 1999, no. 01, 29. Januar 1999 (1999-01-29) -& JP 10 287190 A (KANSEI CORP), 27. Oktober 1998 (1998-10-27)
- PATENT ABSTRACTS OF JAPAN vol. 015, no. 386 (M-1163), 30. September 1991 (1991-09-30) & JP 03 157237 A (AISIN CHEM CO LTD), 5. Juli 1991 (1991-07-05)
- PATENT ABSTRACTS OF JAPAN vol. 012, no. 315 (M-735), 26. August 1988 (1988-08-26) & JP 63 087342 A (INOUE MTP CO LTD), 18. April 1988 (1988-04-18)

## Beschreibung

Die Erfindung betrifft ein mit Kunststoff hinterspritzbares, vorgeformtes Dekorelement nach dem Oberbegriff des Anspruchs 1, wie es aus der US-A-5 296 340 bekannt ist. Die Erfindung betrifft ferner ein mit einem Dekorelement versehenes und durch Hinterspritzen hergestelltes Kunststoffteil.

Es ist bekannt, zur Dekoration von Kunststoffteilen, beispielsweise auch zur Dekoration von Innenausstattungsteilen von Kraftfahrzeugen, Dekorelemente zu verwenden, die auf die zu dekorierenden Oberflächen aufgebracht werden und eine Folie aufweisen, die entweder auf ihrer Außen- oder ihrer Innenseite mit einem Dekor bedruckt ist. Das Aufbringen kann durch ein vollflächiges Verkleben der Dekorelemente erfolgen, wobei das derart erzielbare äußere Erscheinungsbild oft nicht sehr zufrieden stellend ist. Das Aufbringen der Dekorelemente ist, insbesondere bei Oberflächen, die stark gekrümmt oder unregelmäßig gestaltet sind, schwierig. Aus diesem Grund wurde daher oft davon Abstand genommen, diverse Gegenstände oder Bestandteile derselben unter Verwendung solcher Dekorelemente ansprechender zu gestalten.

Dekorelemente, die bei der Herstellung eines Kunststoff - Bauteils durch Hinterspritzen eingebunden sind, weisen bei sorgfältiger Herstellung zwar ein besseres äußeres Erscheinungsbild auf, die Herstellung der Teile ist jedoch technisch aufwändiger. Die Dekorwirkung von derart mit dem betreffenden Teil verbundenen Dekorelementen entspricht jener von verklebten Dekorelementen. Es besteht nun vielfach der Wunsch, optisch ansprechender gestaltete oder gestaltbare Dekorelemente zur Verfügung zu haben, sodass sich der Aufwand der Herstellung durch Hinterspritzen lohnt. Darüber hinaus besteht der Wunsch, die ästhetische Wirkung von Dekorelementen mit einer funktionellen Wirkung, beispielsweise dem Betonen von Bereichen, wo Bedienelemente oder dergleichen im Kunststoffteil untergebracht sind, zu verbinden.

Aus der US-A-5 270 097 ist ein Dekorelement bekannt, bei dem eine transparente Folie auf ihrer Rückseite durch ein Muster profiliert und dort mit einem weiteren Muster bedruckt ist. Darauf ist eine weitere, durchgehende Druckschicht vorgesehen. Auf der Vorderseite der Folie befindet sich eine zusätzliche transparente Zwischenschicht aus Harz, die mit einem Muster bedruckt ist.

Der Erfindung liegt somit die Aufgabe zu Grunde, ein Dekorelement zur Verfügung zu stellen, welches optisch wesentlich ansprechender gestaltbar ist, als die bekannten Dekorelemente und welches den oben erwähnten Bedürfnissen und Anforderungen entspricht.

Gelöst wird die gestellte Aufgabe erfindungsgemäß durch ein Dekorelement mit den Merkmalen des Anspruchs 1.

Gemäß der Erfindung kann das Dekorelement somit auf vielfältige Weise derart gestaltet werden, dass sein Dekor für den Betrachter eine optisch sehr ansprechende Tiefenwirkung entfaltet, insbesondere kann das Dekor eine dreidimensionale Wirkung aufweisen, die bei weitem die tatsächliche Tiefendimension der bedruckten Kunststofffolie übertrifft. Erfindungsgemäß ausgeführte Dekorelemente können so gestalten werden, dass, je nach Umgebungslicht bzw. -beleuchtung, Reflexionen und Schatteneffekte auftreten, die zur Folge haben, dass das Dekorelement auch unter ungünstigen Lichtverhältnissen gut sichtbar bleibt. Erfindungsgemäß ausgeführte Dekorelemente lassen sich durch Hinterspritzen sehr gut mit einem Kunststoffteil verbinden, sodass es eine Vielzahl von Anwendungsbereichen gibt.

Gemäß einer bevorzugten Ausführungsform der Erfindung ist das Dekorelement derart gestaltet, dass die Farb - Deckschicht aus zumindest einer bzw. einem gegenüber dem Dekor der Innenseite abweichenden Farbe bzw. Farbton besteht. Damit läßt sich eine besonders effektvolle Kontrastwirkung erzeugen.

Eine besonders deutliche dreidimensionale Wirkung läßt sich dann erzielen, wenn das Dekor der Außenseite mit dem Dekor der Innenseite zumindest im Wesentlichen übereinstimmt.

Die dreidimensionale Wirkung kann ferner erfindungsgemäß dadurch verstärkt werden, dass das Dekor auf der Außenseite gegenüber dem Dekor auf der Innenseite geringfügig versetzt ist.

Besonders deutliche Licht- /Schatteneffekte sowie Reflexionseffekte lassen sich bei einer Ausführung, bei der sich das Dekor auf beiden Seiten zumindest im Wesentlichen aus geometrischen und insbesondere gleichartigen Strukturen zusammensetzt, erzielen. Gerade solche Ausführungsformen sind bei Anwendungen, die welchen bestimmte Bereiche mit Bedienelementen oder dergleichen betont werden sollen, von Vorteil.

Als optisch besonders ansprechend und für den Betrachter auffallend sind dabei Muster, die sich aus n-Ecken mit n ≥ 3, aus Kreisen, Ellipsen, Linien oder dergleichen zusammensetzen.

Alternativ oder zusätzlich kann das auf der Innenseite und der Außenseite der Folie des Dekorelementes aufgebrachte Dekor auch aus Buchstaben und / oder Ziffern bestehen. Demnach können Dekorelemente auch zur Beschriftung von Bauteilen, von Bedienelementen und dergleichen verwendet werden.

Die im Dekorelement vorhandene beidseitig bedruckte Folie besteht insbesondere aus Polycarbonat oder aus Polymethylmethacrylat. Diese Materialien sind besonders haltbar, lichtbeständig und transparent, was für sie für einen Einsatz in Dekorelementen besonders geeignet macht.

Die Dicke der beidseitig bedruckten Folie hat einen gewissen Einfluß auf die erzielbare Tiefenwirkung und wird auch auf das gewählte Dekor abgestimmt. Besonders geeignet sind Folien, die eine Dicke von 0,2 bis 2 mm aufweisen.

Für bestimmte Anwendungsbereiche kann es fernen von Vorteil sein, wenn das Dekorelement auch besonders abriebsbeständig und gegenüber Feuchtigkeit unempfindlich ist. Es kann daher günstig sein, wenn die Außenseite des Dekorelementes mit eine Schutzschicht aus einer transparenten Kunststofffolie versehen ist, die auf die Folie des Dekorelementes auflaminiert sein kann. Ein besonders geeignetes Material für die Schutzschicht ist Polymethylmethacrylat, mit einer Foliendicke von 50 bis 500 µm.

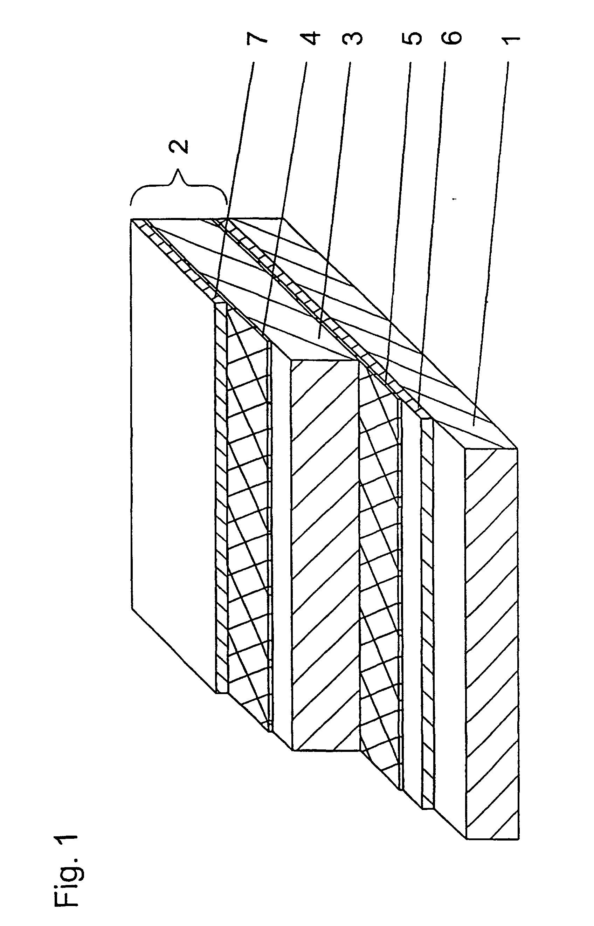

Weitere Merkmale, Vorteile und Einzelheiten der Erfindung werden nun anhand der Zeichnung, die schematisch ein Ausführungsbeispiel der Erfindung zeigt, näher beschrieben. Dabei zeigt Fig. 1 eine Schrägansicht eines Ausschnittes eines mit einem erfindungsgemäß ausgeführten Dekorelement versehenen Kunststoffteils.

Fig. 1 zeigt nur einen kleinen Ausschnitt eines Kunststoffteils 1, welches mit einem hier streifenförmigen Dekorelement 2 versehen ist, welches mit der Oberseite des Teils 1 insbesondere bündig abschließt. Das Dekorelement 2 besteht aus einer transparenten, zumindest jedoch transluzenten, Kunststofffolie 3, die beidseitig mittels Siebdruck mit einem Dekor 4, 5 versehen ist. Das Dekor 4, 5 wird von einem nicht flächenbedeckenden Muster gebildet, indem die aufgedruckte Farbe die ausgewählten Strukturen umrandet oder nachzeichnet. Es ist somit nur ein kleiner Teil der Außen- und Innenseite der Folie 3 mit dem Muster bedeckt. Das an der Innenseite der Folie 3 aufgebrachte Dekor 5 ist zusätzlich mit einer Deckschicht 6 aus Farbstoff komplett bedeckt. Die Deckschicht 6 wird entweder aus der oder einer der für das Dekor 5 verwendeten Farbe oder aus einer bzw. einem gegenüber dem Dekor 5 auf der Innenseite abweichenden Farbe bzw. Farbton erstellt.

Bei der in Fig. 1 gezeigten Ausführung ist das außenseitige Dekor 4 ein Gitter aus Quadraten. Das innenseitig aufgebrachte Dekor 5 ist ein übereinstimmend ausgeführtes Gitter, das insbesondere gegenüber dem Gitter auf der Außenseite versetzt aufgebracht ist. Der Versatz kann beispielsweise in diagonaler Richtung erfolgen. Das an der Außenseite der Folie 3 aufgebrachte Dekor 4 ist mit einer transparenten Schutzschicht 7 bedeckt, die unter Zuhilfenahme eines Haftvermittlers, beispielsweise eines Schmelzklebers, auflaminiert ist. Je nach den Anforderungen, die an den Teil 1 beispielsweise bezüglich Abriebsbeständigkeit gestellt werden, kann auf die Schutzschicht 7 auch verzichtet werden.

Das derart gestaltete Dekorelement 2 hat für den Betrachter eine auffallende und sehr ansprechende Tiefenwirkung, die insbesondere auf das übereinstimmende Dekor 4, 5 an der Innen- und Außenseite der Folie 3 und auf das Entstehen von Schatteneffekten des an der Außenseite befindlichen Dekors 4 auf dem an der Innenseite befindlichen Dekor 5 bzw. der dort aufgebrachten Deckschicht 6 zurückzuführen ist. Ein gegenseitiger Versatz des Dekors 4 zum Dekor 5 verstärkt diesen Effekt. Die für das Dekor 4 auf der Innenseite, das Dekor 5 auf der Außenseite sowie die Deckschicht 6 gewählten Farben können zusätzlich auf die erzielbare Wirkung Einfluss nehmen. So ist es beispielsweise von Vorteil, wenn die Farbe, welche für das Dekor 4 an der Außenseite verwendet wird, einen etwas dunkleren Farbton aufweist, als die für das Dekor 5 an der Innenseite verwendete Farbe. Effekt verstärkend kann auch der Farbton der Deckschicht 6 wirken, beispielsweise wenn dieser wesentlich heller ist als der Farbton für das Dekor 5.

Geometrische Strukturen, wie die in Fig. 1 dargestellte Struktur, tragen dazu bei, dass bei unterschiedlichen Lichtverhältnissen - Sonneneinstrahlung oder künstliche Beleuchtung - Licht- und Schatteneffekte entstehen können, die das Dekorelement 2 besonders gut sichtbar machen. Dabei kann der Effekt entstehen, dass das Dekorelement 2 in einer sehr hellen Umgebung, bei Tageslicht und Sonnenschein, sehr gut sichtbar ist und/oder der Effekt, dass das Dekorelement 2 bei eher schlechteren Lichtverhältnissen, etwa Nachts oder bei schlechter Beleuchtung, gut sichtbar bleibt.

Zur Herstellung des Dekorelementes 2 wird insbesondere eine Folie 3 aus Polycarbonat oder Polymethylmethacrylat mit einer Dicke von 0,2 bis 2 mm verwendet. Auf die beiden Folienseiten wird das vorgesehene Dekor durch Siebdruck aufgebracht. Die auf beiden Seiten bedruckte Folie 3 wird getrocknet und dehydriert. Anschließend wird, bei Bedarf, auf die Außenseite der Folie 3 die transparente Schutzschicht 7 auflaminiert. Die Schutzschicht 7 besteht insbesondere aus PMMA (Polymethylmethacrylat) und weist eine konstante Dicke, die zwischen 50 und 500 µm betragen kann, auf. Die derart bearbeitete Folie 3 wird anschließend thermisch verformt, um sie an das Teil 1 anzupassen. Das Verformen kann in bekannter Weise durch Tiefziehen unter Vakuum erfolgen. Das derart entstandene Formteil wird den Konturen des Fertigteiles, des Dekorelementes 2, entsprechend gestanzt.

Das nun fertige Dekorelement 2 ist in seinen Dimensionen auf das Spritzgießwerkzeug abgestimmt, damit es beim Einlegen in die Spritzgießform nicht beschädigt wird. Zur Herstellung des betreffenden Kunststoffteils wir das Dekorelement 2 in die offene Spritzgießform eingelegt, die Form wird geschlossen und das Dekorelement 2 wird durch Einspritzen des Kunststoffmaterials hinterspritzt. Über die Anspritzgeometrie wird sichergestellt, dass das Dekorelement 2 auf schonende Weise mit dem eingebrachten Kunststoffmaterial in Berührung kommt, um Beschädigungen während des Hinterspritzens zu vermeiden.
Das fertige Kunststoffteil 1 wird dem Spritzgießwerkzeug entnommen und, wie vorgesehen, weiter verarbeitet bzw. mit dem Endprodukt zusammengefügt

Mit der Erfindung lässt sich eine Vielzahl an Kunststoffteilen mit Dekorelementen, die eine auffallende und optisch sehr ansprechende Tiefenwirkung aufweisen, herstellen. Diese Teile können in Folge ihrer erfindungsgemäßen Ausgestaltung nicht nur sehr ansprechend wirken, sondern auch die Funktion übernehmen, bestimmte Bereiche, Bauteile, Bedienelemente und dergleichen optisch hervorheben. Letzteres kann insbesondere bei Verwendungen oder Abdeckungen der Fall sein, etwa um dort angebrachte Bedienelemente, wie Kippschalter oder dergleichen, auffallender anzuordnen. Dadurch kann dem Benützer auch bei ungünstigen Lichtverhältnissen das Auffinden der Bedienelemente erleichtert werden. In die für ein bestimmtes Teil vorgesehene Spritzgießform können verschiedentlich gestaltete Dekorelemente eingelegt werden. Dies eröffnet die Möglichkeit, Kunden eine Vielzahl verschiedener Dekors zur Auswahl anzubieten.

Selbstverständlich ist die Herstellung der Dekorelemente 2 nicht an bestimmte Formen, Farben oder Dekorstrukturen gebunden. Die Dekorelemente 2 lassen sich in einer Vielzahl von Formen herstellen, beispielsweise auch mit Ausnehmungen oder Öffnungen. Auch bezüglich der verwendeten Farben und der möglichen Muster gibt es kaum Einschränkungen. Mit geometrischen Mustern unter Verwendung von Dreiecken, Rechtecken, Kreisen, Linien und dergleichen als Grundelemente lassen sich besonders gute Tiefenwirkungen erzielen, es sind jedoch auch Schriftzüge, Buchstaben, Ziffern etc. gut geeignet.

Zu den gemäß der Erfindung erstellbaren Teilen gehört eine Vielzahl von Gegenständen und Produkten sowie deren Bestandteile, die nicht erschöpfend aufgezählt werden können, wie Innen- oder Außenausstattungsteile von Kraftfahrzeugen oder Bestandteile solcher Ausstattungsteile, beispielsweise Zierleisten, Verkleidungsteile oder Verblendungen, die im Bereich der Fahrzeugtüren, der Instumententafel, der Mittelkonsole und dergleichen einsetzbar sind, ferner Gehäuse oder Gehäuseteile von Druckern, Bildschirmen, oder von diversen im Haushaltsbereich einsetzbare Geräten.

## Patentansprüche

1. Mit Kunststoff hinterspritzbares, vorgeformtes Dekorelement, welches eine zumindest in einem Teilbereich beidseitig mit einem nicht flächenbedeckenden Dekor versehene, transparente Kunststofffolie aufweist,
**dadurch gekennzeichnet,**
**dass** das beidseitig vorgesehene Dekor (4, 5) aufgedruckt ist, wobei das Dekor (5) auf der Innenseite zusätzlich mit einer flächenbedeckenden Farb-Deckschicht (6) bedruckt ist.

2. Dekorelement nach Anspruch 1, **dadurch gekennzeichnet, dass** die Farb-Deckschicht (6) aus einer bzw. einem gegenüber dem Dekor (5) auf der Innenseite abweichenden Farbe bzw. abweichenden Farbton besteht.

3. Dekorelement nach Anspruch 1 oder 2, **dadurch gekennzeichnet, dass** das Dekor (4) auf der Außenseite mit dem Dekor (5) auf der Innenseite zumindest im Wesentlichen übereinstimmt.

4. Dekorelement nach einem der Ansprüche 1 bis 3, **dadurch gekennzeichnet, dass** das Dekor (4) auf der Außenseite gegenüber dem Dekor (5) auf der Innenseite geringfügig versetzt ist.

5. Dekorelement nach einem der Ansprüche 1 bis 4, **dadurch gekennzeichnet, dass** das Dekor (4, 5) ein zumindest im Wesentlichen aus geometrischen und insbesondere gleichartigen Strukturen zusammengesetztes Muster aufweist.

6. Dekorelement nach Anspruch 5, **dadurch gekennzeichnet, dass** sich das Muster (4, 5) aus n-Ecken mit n ≥ 3, aus Kreisen, Ellipsen, Linien oder dergleichen zusammensetzt.

7. Dekorelement nach einem der Ansprüche 1 bis 4, **dadurch gekennzeichnet, dass** das Dekor (4, 5) Buchstaben und / oder Ziffern aufweist.

8. Dekorelement nach einem der Ansprüche 1 bis 7, **dadurch gekennzeichnet, dass** die beidseitig bedruckte Folie (3) aus Polycarbonat oder Polymethylmethacrylat besteht.

9. Dekorelement nach einem der Ansprüche 1 bis 8, **dadurch gekennzeichnet, dass** die beidseitig bedruckte Folie (3) eine Dicke von 0,2 bis 2 mm aufweist.

10. Dekorelement nach einem der Ansprüche 1 bis 9, **dadurch gekennzeichnet, dass** die Außenseite der Folie (3) mit einer Schutzschicht (7) aus einer transparenten oder durchscheinenden Kunststofffolie bedeckt ist.

11. Dekorelement nach Anspruch 10, **dadurch gekennzeichnet, dass** die Schutzschicht (7) auflaminiert ist.

12. Dekorelement nach Anspruch 10 oder 11, **dadurch gekennzeichnet, dass** die Schutzschicht (7) eine Folie aus Polymethylmethacrylat ist.

13. Dekorelement nach einem der Ansprüche 10 bis 12, **dadurch gekennzeichnet, dass** die Folie für die Schutzschicht (7) eine Dicke von 50 bis 500 µm aufweist.

14. Dekorelement nach einem der Ansprüche 1 bis 13, **dadurch gekennzeichnet, dass** es durch Tiefziehen unter Vakuum geformt ist.

15. Kunststoffteil, welches durch Hinterspritzen mit einem Dekorelement (2) versehen ist, welches gemäß zumindest einem der Ansprüche 1 bis 14 ausgeführt ist.

## Claims

1. A preformed decorative element which can be injection overmoulded with a plastic material, comprising a transparent plastic foil provided at least partially on both sides with a non-surface-covering decoration,
**characterised in**
**that** the decoration (4, 5) provided on both sides is printed on, wherein the decoration (5) is additionally printed on the inside with a surface-covering colour coating layer (6).

2. The decorative element according to claim 1, **characterised in that** the colour coating layer (6) consists of a colour which differs or a shade which differs from the decoration (5) on the inside.

3. The decorative element according to claim 1 or 2, **characterised in that** the decoration (4) on the outside at least substantially agrees with the decoration (5) on the inside.

4. The decorative element according to any one of claims 1 to 3, **characterised in that** the decoration (4) on the outside is slightly offset with respect to the decoration (5) on the inside.

5. The decorative element according to any one of claims 1 to 4, **characterised in that** the decoration (4, 5) has a pattern composed at least substantially of geometric and especially the same type of structures.

6. The decorative element according to claim 5, **characterised in that** the pattern (4, 5) is composed of n-gons, where n ≥ 3, of circles, ellipses, lines or the like.

7. The decorative element according to any one of claims 1 to 4, **characterised in that** the decoration (4, 5) comprises letters and/or numbers.

8. The decorative element according to any one of claims 1 to 7, **characterised in that** the foil (3) printed on both sides consists of polycarbonate or polymethyl methacrylate.

9. The decorative element according to any one of claims 1 to 8, **characterised in that** the foil (3) printed on both sides has a thickness of 0.2 to 2 mm.

10. The decorative element according to any one of claims 1 to 9, **characterised in that** the outside of the foil (3) is covered with a protective layer (7) comprising a transparent or translucent plastic foil.

11. The decorative element according to claim 10, **characterised in that** the protective layer (7) is laminated on.

12. The decorative element according to claim 10 or 11, **characterised in that** the protective layer (7) is a polymethyl methacrylate foil.

13. The decorative element according to any one of claims 10 to 12, **characterised in that** the foil for the protective layer (7) has a thickness of 50 to 500 µm.

14. The decorative element according to any one of claims 1 to 13, **characterised in that** it is formed by deep drawing under vacuum.

15. A plastic part provided with a decorative element (2) by injection overmoulding, which is executed at least according to any one of claims 1 to 14.

## Revendications

1. Elément de décor préformé et injectable par l'arrière avec de la matière plastique, qui présente un film de matière plastique transparente, pourvu bilatéralement, du moins dans une zone partielle, d'un décor ne cachant pas la surface,
**caractérisé en ce que**
le décor (4, 5) prévu bilatéralement est imprimé, tandis que le décor (5) de la face interne comporte en plus une impression sous forme d'une couche colorée couvrante (6) cachant la surface.

2. Elément de décor selon la revendication 1, **caractérisé en ce que** la couche colorée couvrante (6) est composée d'une couleur ou d'une teinte différente de celle du décor (5) de la face interne.

3. Elément de décor selon la revendication 1 ou 2, **caractérisé en ce que** le décor (4) de la face externe coïncide du moins sensiblement avec le décor (5) de la face interne.

4. Elément de décor selon l'une des revendications 1 à 3, **caractérisé en ce que** le décor (4) de la face externe est légèrement décalé par rapport au décor (5) de la face interne.

5. Elément de décor selon l'une des revendications 1 à 4, **caractérisé en ce que** le décor (4, 5) présente un motif composé du moins sensiblement de structures géométriques et notamment analogues.

6. Elément de décor selon la revendications 5, **caractérisé en ce que** le motif (4, 5) est composé de n angles, où on a n ≥ 3, de cercles, d'ellipses, de lignes ou similaires.

7. Elément de décor selon l'une des revendications 1 à 4, **caractérisé en ce que** le décor (4, 5) comporte des lettres et/ou des chiffres.

8. Elément de décor selon l'une des revendications 1 à 7, **caractérisé en ce que** le film imprimé bilatéralement (3) est composé de polycarbonate ou de polyméthylméthacrylate.

9. Elément de décor selon l'une des revendications 1 à 8, **caractérisé en ce que** le film imprimé bilatéralement (3) présente une épaisseur de 0,2 à 2 mm.

10. Elément de décor selon l'une des revendications 1 à 9, **caractérisé en ce que** la face externe du film (3) est recouverte d'une couche protectrice (7) composée d'un film de matière plastique transparente ou translucide.

11. Elément de décor selon la revendication 10, **caractérisé en ce que** la couche protectrice (7) est laminée.

12. Elément de décor selon la revendication 10 ou 11, **caractérisé en ce que** la couche protectrice (7) est un film de polyméthylméthacrylate.

13. Elément de décor selon l'une des revendications 10 à 12, **caractérisé en ce que** le film de la couche protectrice (7) présente une épaisseur de 50 à 500 µm.

14. Elément de décor selon l'une des revendications 1 à 13, **caractérisé en ce qu'**il est moulé par emboutissage sous vide.

15. Pièce en matière plastique qui est pourvue par injection par l'arrière d'un élément de décor (2) qui est réalisé selon au moins une des revendications 1 à 14.
